# EUROPEAN PATENT SPECIFICATION

(11) **EP 3 168 745 B1**
(45) Date of publication and mention of the grant of the patent: **17.01.2024**
(21) Application number: 16159165.6
(22) Date of filing: 08.03.2016
(51) Int. Cl.: G06F 8/61, G06F 8/65

(54) **METHOD, DEVICE AND SYSTEM FOR APPLICATION UPDATING**
VERFAHREN, VORRICHTUNG UND SYSTEM ZUR ANWENDUNGSAKTUALISIERUNG
PROCÉDÉ, DISPOSITIF ET SYSTÈME DE MISE À JOUR D'APPLICATION

(30) Priority: 29.10.2015 CN 201510719836
(43) Date of publication of application: 17.05.2017
(73) Proprietor: Xiaomi Inc., Beijing 100085 (CN)
(72) Inventor: CHEN, Shuai, 100085 BEIJING (CN); LIU, Tiejun, 100085 BEIJING (CN); ZHANG, Xiangyang, 100085 BEIJING (CN)
(74) Representative: Cabinet Beau de Loménie

(56) References cited:
- US-A1- 2009 172 658
- US-A1- 2011 289 495
- "REMOTE SUBSCRIPTION SERVICES", IBM TECHNICAL DISCLOSURE BULLETIN, INTERNATIONAL BUSINESS MACHINES CORP. (THORNWOOD), US, vol. 37, no. 6B, 1 June 1994 (1994-06-01), page 263/264, XP000456000, ISSN: 0018-8689

## Description

### TECHNICAL FIELD

The present invention generally relates to the technical field of wireless communications, and more particularly, to a method, device and system for Application (APP) updating.

### BACKGROUND

At present, operating systems of terminals usually provide automatic APP upgrading, that is, providing silent upgrading of an installation file under Wireless Fidelity (WIFI). Although an APP upgrading process is simplified, the silent upgrading of a great number of APPs and the centralized downloading of installation packages every time when a user is connected to WIFI may cause network congestion and harm the user experience.

The embodiments of the present invention are presented to solve the problem that the silent upgrading of APPs and the centralized downloading of installation packages may cause network congestion.

The document US20110289495 A1 discloses a software update method, which permits a local software update server to act as an update source for client computer system.

### SUMMARY

Accordingly, the embodiments of the present invention provide a method, device and system for APP updating, in accordance with claims which follow.

A method for application updating is provided in claim 1.

A router is provided in claim 5.

A router device for application updating is provided in claim 9.

A computer program is provided in claim 10.

A recoding medium readable by a computer is provided in claim 11.

In certain embodiments, the step that the installation file for updating the at least one APP to be updated is downloaded according to the APP list to be updated may include that:
data identifying a preset time, sent by the target terminal, is received; and
in response to determination that the preset time is reached, the installation file is downloaded from a network side according to the APP list to be updated.

Optionally, the step that the installation file of the APP to be updated is downloaded according to the APP list to be updated may include that:
network data traffic of the router is detected; and
in response to determination that the network data traffic is less than or equal to preset network data traffic, the installation file is downloaded from a network side according to the APP list to be updated.

Optionally, the step that the installation file is downloaded according to the APP list to be updated may include that:
an APP corresponding to a downloaded installation file is compared, by the router, with an APP in the APP list to be updated; and
in response to determination that there does not exist locally the installation file of the APP in the APP list to be updated, the installation file of the APP is downloaded, by the router, from a network side.
optionally, the downloading module may include:
   a receiving sub-module, configured to receive from the target terminal data identifying a preset time; and
   a first downloading sub-module, configured to, in response to determination that the preset time received by the receiving sub-module is reached, download the installation file from a network side according to the APP list to be updated.

In the router, optionally, the downloading module may include:
a detection sub-module, configured to detect network data traffic of the router; and
a second downloading sub-module, configured to, in response to determination that the network data traffic is less than or equal to preset network data traffic, download the installation file from a network side according to the APP list to be updated.

In the router, optionally, the downloading module may include:
a comparison sub-module, configured to compare an APP corresponding to a downloaded installation file with an APP in the APP list to be updated; and
a third downloading sub-module, configured to, in response to determination of the comparison sub-module that there does not exist locally the installation file of the APP in the APP list to be updated, download the installation file of the APP from the network side.

The invention is also directed to a computer program for executing the steps of a method for APP updating as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present invention may achieve the following beneficial effects:
in an embodiment, a router downloads, in advance, an installation file of an APP to be updated, and a terminal acquires the installation file from the router when updating the APP. In such a manner, data may be directly downloaded from the router faster, so that an APP updating speed is increased, and moreover, for a user, network congestion caused by centralized downloading of installation files may be avoided. In addition, a silent manner is still adopted for an APP updating process, that is, the user is not required to execute upgrading installation operation, and the terminal automatically updates the APP.

The terminal periodically sends local APP identifier and version number to the router, and the router determines an APP to be updated and generates an APP list to be updated. Therefore, the router can download the installation file of the APP to be updated, in advance, and then the terminal can acquire the installation file from the router when updating the APP. In such a manner, data may be directly downloaded from the router faster, so that the APP updating speed is increased, and moreover, for the user, network congestion caused by the centralized downloading of the installation files may be avoided. In addition, the silent manner is still adopted for the APP updating process, that is, the user is not required to execute the upgrading installation operation, and the terminal automatically updates the APP.

In another embodiment, the router does not keep the installation file of the updated or uninstalled APP of the terminal, so that a storage space of the router is effectively saved.

In another embodiment, an APP corresponding to a downloaded installation file is compared with an APP in an APP list to be updated, and the installation file of the APP is downloaded from a network side according to a comparison result. Therefore, downloading efficiency of the router is improved, downloading of a useless APP installation file is avoided, and waste of network data traffic is reduced.

It is to be understood that both the foregoing general description and the following detailed description are illustrative and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the present invention and, together with the description, serve to explain the principles of the embodiments of the present invention.
Fig. 1 is a block diagram of a system for APP updating according to an embodiment.
Fig. 2 is a block diagram of a system for APP updating according to another embodiment.
Fig. 3 is a block diagram of a device for APP updating according to an embodiment.
Fig. 4 is a block diagram of an acquisition module according to an embodiment.
Fig. 5 is a block diagram of an acquisition module configured to acquire an APP list in a particular manner;
Fig. 6 is a block diagram of an acquisition module configured to acquire an APP list in another particular manner;
Fig. 7 is a block diagram of a downloading module according to an embodiment.
Fig. 8 is a block diagram of a downloading module according to another embodiment.
Fig. 9 is a block diagram of a device for APP updating according to another embodiment.
Fig. 10 is a block diagram of an acquisition module according to an embodiment.
Fig. 11 is a block diagram of a terminal device.
Fig. 12 is a block diagram of another configuration of terminal device.
Fig. 13 is a block diagram of yet another configuration of terminal device.
Fig. 14 is a block diagram of a still another configuration of terminal device.
Fig. 15 is a block diagram of a terminal device configured to participate in a method for APP updating according to another embodiment.
Fig. 16 is a flow chart showing a method for APP updating according to an embodiment.
Fig. 17 is a flow chart showing a method for APP updating according to another embodiment.
Fig. 18 is a flow chart showing a method for APP updating according to another embodiment.
Fig. 19 is a flow chart showing a method for APP updating according to another embodiment.
Fig. 20 is a flow chart showing a method for APP updating according to another embodiment.
Fig. 21 is a flow chart showing a method implemented in a terminal cooperating with the method for APP updating according to an embodiment.
Fig. 22 is a flow chart showing a method by which a terminal may generate a list of APPs for updating.
Fig. 23 is a block diagram of a terminal device to cooperate with the method for APP updating according to an embodiment.
Fig. 24 is a block diagram of a router device for APP updating according to an embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementation modes consistent with the embodiments of the present invention. Instead, they are merely examples of apparatuses and methods consistent with aspects related to the embodiments of the present invention as recited in the appended claims.

Three parties are involved in the technical solutions provided by the embodiment of the present invention, which respectively are: a network-side server, a terminal and a router, wherein the terminal may be any piece of equipment with a network connection function, such as a mobile phone, a computer, a digital broadcast terminal, a message transceiver, a gaming console, a tablet device, a medical device, fitness equipment and a personal digital assistant.

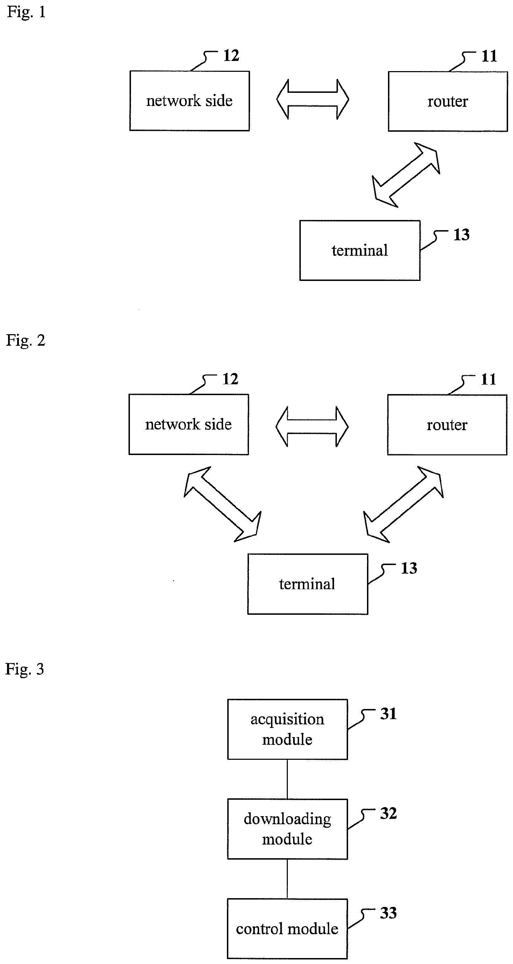

Fig. 1 is a block diagram of a system for APP updating according to an embodiment. As shown in Fig. 1, the system 10 for APP updating includes:
a router 11, configured to acquire an APP list to be updated and download an installation file of an APP to be updated according to the APP list to be updated;
a network side 12, configured to send the installation file of the APP to be updated to the router; and
a terminal 13, configured to acquire the installation file of the APP to be updated from the router and update the APP to be updated according to the installation file.

For example, the APP list to be updated acquired by the router 11 may include five APPs to be updated: APP1, APP2, APP3, APP4 and APP5. The router 11 downloads installation files of the five APPs to be updated from the network side 12. The terminal 13 directly acquires the installation files of the APPs to be updated from the router 11, for updating.

In the embodiment, the target terminal acquires and installs as a batch all of the installation files that the router has downloaded for APPs on the APP list, or the terminal may acquire and install the installation files individually. The terminal acquires and installs at least one APP in the APP list.

In the embodiment, the router downloads, in advance, the installation files of the APPs to be updated, and the terminal acquires the installation files from the router when updating the APPs. In such a manner, data may be directly downloaded from the router faster, so that an APP updating speed is increased, and moreover, for a user, network congestion caused by centralized downloading of installation files may be avoided. In addition, a silent manner is still adopted for an APP updating process, that is, the user is not required to execute upgrading installation operation, and the terminal automatically updates the APP.

In another embodiment, there may be multiple manners for the router 11 to acquire the APP list to be updated, and some examples thereof are specifically described below.

Manner A1: the network side 12 generates an APP list to be updated according to APP information periodically sent by the terminal 13, and sends the APP list to be updated to the router 11.

Fig. 2 is a block diagram of a system for APP updating according to another embodiment. As shown in Fig. 2, the terminal 13 in the system is further configured to periodically send local APP information to the network side 12, the APP information including an APP identifier and a version number. The network side 12 is further configured to determine the APP to be updated of the terminal, according to the APP information, generate an APP list to be updated and send the APP list to be updated to the router 11.

In manner A1, the terminal periodically sends local APP identifier and version number to the network side, and the network side queries a version of the corresponding APP in an APP store to determine the APP to be updated, generate the APP list to be updated and send the APP list to be updated to the router. In such a manner, the router can download the installation file of the APP to be updated, in advance, and then the terminal can acquire the installation file from the router when updating the APP. Since data may be directly downloaded from the router faster, so that the APP updating speed is increased, and moreover, for the user, network congestion caused by the centralized downloading of the installation files may be avoided. In addition, the silent manner is still adopted for the APP updating process, that is, the user is not required to execute the upgrading installation operation, and the terminal automatically updates the APP.

In addition, the network side may query a version state of the APP in real time, so that the network side may determine the APP to be updated more accurately and comprehensively.

Manner A2: the terminal 13 generates an APP list to be updated, and sends the APP list to be updated to the router 11.

As shown in Fig. 1, the terminal 13 is further configured to periodically detect a local APP to be updated, generate an APP list to be updated according to the APP to be updated and send the APP list to be updated to the router 11.

In manner A2, the terminal determines an APP to be updated by itself, generates an APP list to be updated and sends the APP list to be updated to the router. Therefore, the router can download, in advance, the installation file of the APP to be updated and then the terminal can acquire the installation file from the router when updating the APP. In such a manner, data may be directly downloaded from the router faster, so that the APP updating speed is increased, and moreover, for the user, network congestion caused by the centralized downloading of the installation files may be avoided. In addition, the silent manner is still adopted for the APP updating process, that is, the user is not required to execute the upgrading installation operation, and the terminal automatically updates the APP.

Manner A3: the router 11 periodically receives APP information from the terminal 13, detects an APP to be updated and generates an APP list to be updated.

As shown in Fig. 1, the terminal 13 is further configured to periodically send local APP information to the router 11, the APP information including an APP identifier and a version number. The router 11 is further configured to monitor the APP to be updated according to the APP information, generate an APP list to be updated and download the installation file of the APP to be updated.

In manner A3, the terminal periodically sends the local APP identifier and version number to the router, and the router determines the APP to be updated and generates the APP list to be updated. Therefore, the router can download the installation file of the APP to be updated in advance and then the terminal can acquire the installation file from the router when updating the APP. In such a manner, data may be directly downloaded from the router faster, so that the APP updating speed is increased, and moreover, for the user, network congestion caused by the centralized downloading of the installation files may be avoided. In addition, the silent manner is still adopted for the APP updating process, that is, the user is not required to execute the upgrading installation operation, and the terminal automatically updates the APP.

In the abovementioned three manners, the router can acquire the APP list to be updated The router acquires multiple APP lists to be updated, and the router compares APPs in each list to finally determine an APP of which an installation file is required to be downloaded.

In another embodiment, the router is limited in storage capacity, and may not keep all downloaded installation files all the time. Therefore, the terminal 13 is further configured to, in response to determination that the APP to be updated has been updated or the APP to be updated has been uninstalled, control the router to delete the installation file. The router 11 is further configured to delete the installation file.

In the embodiment, the router does not keep the installation file of the updated or uninstalled APP of the terminal, so that a storage space of the router is effectively saved.

The embodiments of the present invention further provide a device for APP updating, which may be configured as a router. Fig. 3 is a block diagram of a device for APP updating according to an embodiment. The device may be implemented as part or all of electronic equipment by virtue of software, hardware or a combination of the two. As shown in Fig. 3, the device includes:
an acquisition module 31, configured to acquire an APP list to be updated;
a downloading module 32, configured to download an installation file of an APP to be updated according to the APP list to be updated acquired by the acquisition module 31; and
a control module 33, configured to control a target terminal to install the installation file downloaded by the downloading module 32.

In the embodiment, the acquisition module 31 of the router acquires the APP list to be updated, the downloading module 32 downloads the installation file of the APP to be updated according to the APP list to be updated, and the control module 33 controls the target terminal to install the installation file. Therefore, the terminal acquires the installation file from the router when updating the APP. In such a manner, data may be directly downloaded from the router faster, so that an APP updating speed is increased, and moreover, for a user, network congestion caused by centralized downloading of installation files may be avoided. In addition, a silent manner is still adopted for an APP updating process, that is, the user is not required to execute upgrading installation operation, and the terminal automatically updates the APP.

There are multiple manners for the acquisition module 31 to acquire the APP list to be updated, and these are specifically described below.

Manner B1: the acquisition module 31 generates the APP list to be updated by itself.

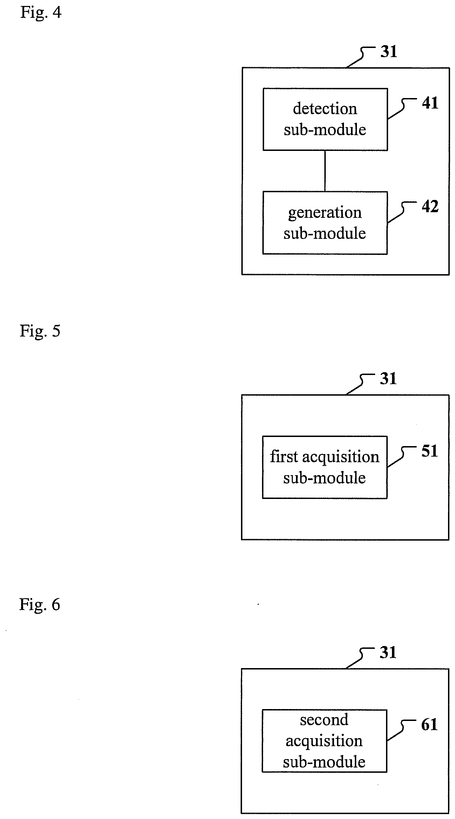

Fig. 4 is a block diagram of an acquisition module according to an embodiment. As shown in Fig. 4, the acquisition module 31 includes:
a detection sub-module 41, configured to detect the APP to be updated; and
a generation sub-module 42, configured to, in response the detection sub-module 41 detecting the APP to be updated, generate the APP list to be updated.

In manner B1, the router determines the APP to be updated by itself, the detection sub-module 41 detects the APP to be updated, and the generation module 42 generates the APP list to be updated. Therefore, the router can download, in advance, the installation file of the APP to be updated and then the terminal can acquire the installation file from the router when updating the APP. In such a manner, data may be directly downloaded from the router faster, so that the APP updating speed is increased, and moreover, for the user, network congestion caused by the centralized downloading of the installation files may be avoided. In addition, the silent manner is still adopted for the APP updating process, that is, the user is not required to execute the upgrading installation operation, and the terminal automatically updates the APP.

Manner B2: the APP list to be updated is acquired from the terminal.

Fig. 5 is a block diagram of an acquisition module to implement Manner B2. As shown in Fig. 5, the acquisition module 31 includes:
a first acquisition sub-module 51, configured to acquire the APP list to be updated from the target terminal.

In manner B2, the terminal determines the APP to be updated by itself, and the first acquisition sub-module 51 acquires the APP list to be updated from the terminal. Therefore, the router can download, in advance, the installation file of the APP to be updated and then the terminal can acquire the installation file from the router when updating the APP. In such a manner, data may be directly downloaded from the router faster, the APP updating speed is increased, and moreover, for the user, network congestion caused by the centralized downloading of the installation files may be avoided. In addition, the silent manner is still adopted for the APP updating process, that is, the user is not required to execute the upgrading installation operation, and the terminal automatically updates the APP.

Manner B3: the APP list to be updated is acquired from a network side.

Fig. 6 is a block diagram of an acquisition module to implement manner B3. As shown in Fig. 6, the acquisition module 31 includes:
a second acquisition sub-module 61, configured to acquire the APP list to be updated from the network side.

In manner B3, the network side determines the APP to be updated and generates the APP list to be updated, and the second acquisition sub-module 61 acquires the APP list to be updated from the network side. Therefore, the router can download, in advance, the installation file of the APP to be updated and then the terminal can acquire the installation file from the router when updating the APP. Since data may be directly downloaded from the router faster, the APP updating speed is increased, and moreover, for the user, network congestion caused by the centralized downloading of the installation files may be avoided. In addition, the silent manner is still adopted for the APP updating process, that is, the user is not required to execute the upgrading installation operation, and the terminal automatically updates the APP.

In addition, the network side may query a version state of the APP in real time, so that the network side may determine the APP to be updated more accurately and comprehensively.

In the abovementioned three manners, the router acquires the APP list to be updated.

For example, the acquisition module 31 may include the detection sub-module 41, the generation sub-module 42, the first acquisition sub-module 51 and the second acquisition sub-module 61.

The router acquires multiple APP lists to be updated, so a comparison sub-module may be added in the acquisition module to finally determine an APP of which an installation file is required to be downloaded after comparing APPs to be updated in each list.

In another embodiment, the router may choose when to download the installation file of the APP to be updated, and there may be multiple manners as follows.

Manner C1, the installation file is downloaded at a preset time.

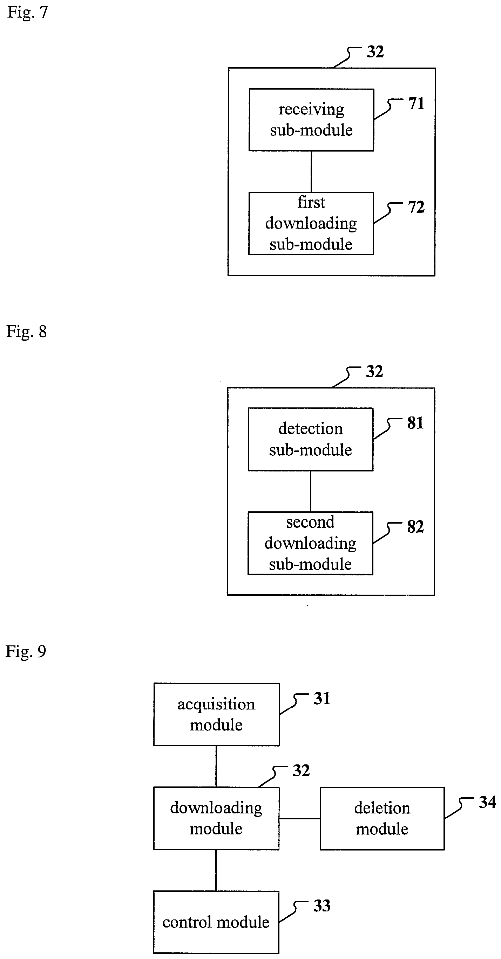

Fig. 7 is a block diagram of a downloading module according to an embodiment. As shown in Fig. 7, the downloading module 32 includes:
a receiving sub-module 71, configured to receive data identifying the preset time, sent by the target terminal; and
a first downloading sub-module 72, configured to, in response to determination that the preset time identified in the data received by the receiving sub-module 71 is reached, download the installation file from the network side according to the APP list to be updated.

For example, the user may make a setting, through the terminal, such that the router executes downloading of the installation file between 12:00PM and 5:00AM, and during this time, the user is usually in a sleep state and may not use a network, and the router is relatively idle, so that downloading during this time may avoid network congestion and influence on use of the user over the network, and thus better user experience may be achieved.

In manner C1, the first downloading sub-module 72 downloads the installation file according to the preset time received by the receiving sub-module 71 to avoid network congestion and influence on the use of the user over the network and achieve better user experience.

Manner C2: the installation file is downloaded during idle time of the router.

Fig. 8 is a block diagram of a downloading module according to another embodiment. As shown in Fig. 8, the downloading module 32 includes:
a detection sub-module 81, configured to detect network data traffic; and
a second downloading sub-module 82, configured to, in response to determination that the network data traffic is less than or equal to preset network data traffic, download the installation file from the network side according to the APP list to be updated.

For example, when the detection sub-module 81 detects that the network data traffic is lower than 10kb/s, the router is relatively idle, and the second downloading sub-module 82 downloads the installation file of the APP to be updated to avoid network congestion and influence on use of the user over the network and achieve better user experience.

In manner C2, the second downloading sub-module 82 downloads the installation file of the APP to be updated to avoid network congestion and influence on use of the user over the network and achieve better user experience.

Manner C1 and manner C2 may be combined for use, that is, the installation file of the APP to be updated may be downloaded at the preset time, or may also be downloaded when the network data traffic is low.

In another embodiment, the router may be connected with the terminal to control the terminal to install the downloaded installation file after downloading the installation file of the APP to be updated.

The control module 33 is configured to, in response to detection of a connection established between the target terminal and the router, send the installation file downloaded by the downloading module 32 to the target terminal, through the connection, for the target terminal to update the APP to be updated by installing the installation file.

In another embodiment, the router is limited in storage capacity, and may not keep the downloaded installation file all the time. Fig. 9 is a block diagram of a device for APP updating according to another embodiment. As shown in Fig. 9, the device further includes:
a deletion module 34, configured to, in response to determination that the terminal has updated the APP, has uninstalled the APP or has had an installation file of a higher-version APP, delete a currently stored installation file of the APP.

In the embodiment, the deletion module 34 deletes the installation file of the updated or uninstalled APP of the terminal, so that a storage space of the router is effectively saved, and waste of network data traffic is reduced.

In another embodiment, for improving downloading efficiency of the router and avoiding downloading of a useless APP installation file, the router may screen out the APP in the APP list to be updated.

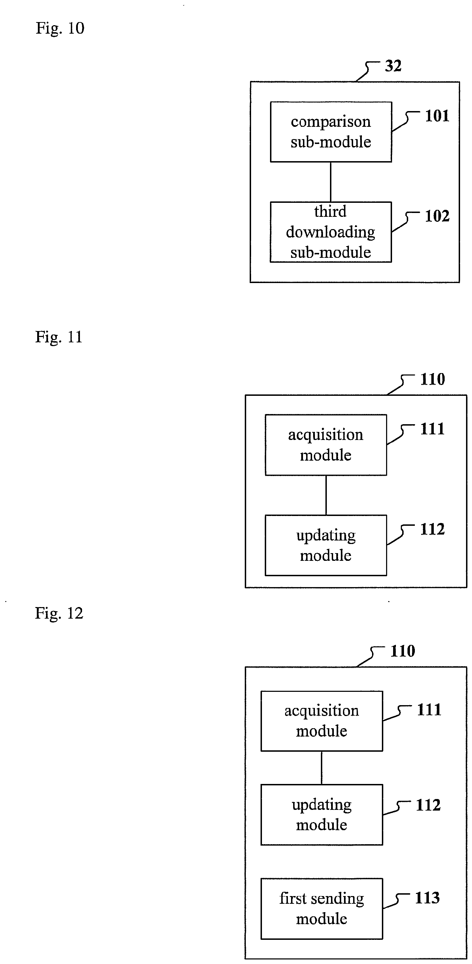

Fig. 10 is a block diagram of an acquisition module according to an embodiment. As shown in Fig. 10, the downloading module 32 includes:
a comparison sub-module 101, configured to compare an APP corresponding to a downloaded installation file with an APP in the APP list to be updated; and
a third downloading sub-module 102, configured to, in response to determination of the comparison sub-module that there does not exist locally the installation file of the APP in the APP list to be updated, download the installation file of the APP from the network side.

For example, APPs corresponding to locally downloaded installation files are APP3, APP6 and APP9. APPs in the APP list to be updated include APP1, APP2, APP3, APP4 and APP5. After the comparison sub-module 101 performs comparison, if an installation file configured for updating APP3 has been downloaded, then the third downloading sub-module 102 will not download the installation file of APP3, and only downloads installation files of the APPs including APP1, APP2, APP4 and APP5.

In the embodiment, the comparison sub-module 101 compares the APP corresponding to the downloaded installation file with an APP in the APP list to be updated, and the third downloading sub-module 102 downloads the installation file of the APP from the network side according to a comparison result. Therefore, the downloading efficiency of the router is improved, downloading of the useless APP installation file is avoided, and waste of network data traffic is reduced.

Configuration of a terminal will now be described. Fig. 11 is a block diagram of a terminal device. The device may be implemented as part or all of electronic equipment by virtue of software, hardware or a combination of the two. As shown in Fig. 11, the device 110 includes:
an acquisition module 111, configured to acquire an installation file of an APP to be updated from a router; and
an updating module 112, configured to update the APP to be updated according to the installation file acquired by the acquisition module.

When the terminal updates an APP, the acquisition module 111 acquires an installation file from the router, and the updating module 112 updates the APP according to the installation file. In such a manner, data may be directly downloaded from the router faster, so that an APP updating speed is increased, and moreover, for a user, network congestion caused by centralized downloading of installation files may be avoided. In addition, a silent manner is still adopted for an APP updating process, that is, the user is not required to execute upgrading installation operation, and the terminal automatically updates the APP.

The terminal may control the router to acquire an APP list to be updated in manners as follows.

Manner D1: the terminal periodically sends APP information to the router, and the router detects an APP to be updated and generates an APP list to be updated.

Fig. 12 is a block diagram of a terminal device configured to implement manner D1. As shown in Fig. 12, the device 110 further includes:
a first sending module 113, configured to periodically send local APP information to the router, the APP information including an APP identifier and a version number, to enable the router to monitor the APP to be updated according to the APP information, generate the APP list to be updated and download the installation file of the APP to be updated.

In manner D1, the terminal periodically sends the local APP identifier and version number to the router through the first sending module 113, and the router determines the APP to be updated by itself and generates the APP list to be updated. Therefore, the router can download the installation file of the APP to be updated in advance and then the terminal can acquire the installation file from the router when updating the APP. In such a manner, data may be directly downloaded from the router faster, so that the APP updating speed is increased, and moreover, for the user, network congestion caused by the centralized downloading of the installation files may be avoided. In addition, the silent manner is still adopted for the APP updating process, that is, the user is not required to execute the upgrading installation operation, and the terminal automatically updates the APP.

Manner D2: the terminal generates the APP list to be updated and sends the APP list to be updated to the router.

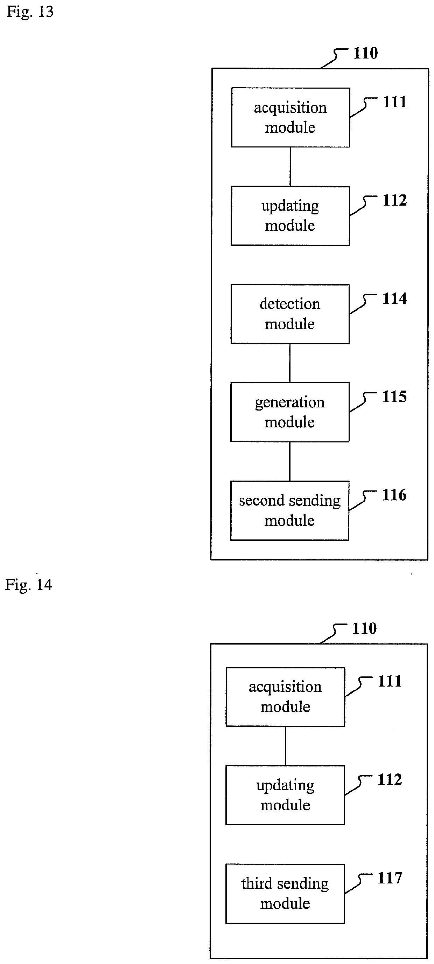

Fig. 13 is a block diagram of a terminal device configured to implement manner D2. As shown in Fig. 13, the device 110 further includes:
a detection module 114, configured to periodically detect the local APP to be updated;
a generation module 115, configured to generate the APP list to be updated according to the APP to be updated detected by the detection module; and
a second sending module 116, configured to send the APP list to be updated generated by the generation module to the router.

In manner D2, the terminal determines the APP to be updated through the detection module 114, the generation module 115 generates the APP list to be updated, and the second sending module 116 sends the APP list to be updated to the router. Therefore, the router can download the installation file of the APP to be updated, in advance, and then the terminal can acquire the installation file from the router when updating the APP. In such a manner, data may be directly downloaded from the router faster, so that the APP updating speed is increased, and moreover, for the user, network congestion caused by the centralized downloading of the installation files may be avoided. In addition, the silent manner is still adopted for the APP updating process, that is, the user is not required to execute the upgrading installation operation, and the terminal automatically updates the APP.

Manner D3: the terminal periodically sends the APP information to a network side, and the network side generates the APP list to be updated and sends the APP list to be updated to the router.

Fig. 14 is a block diagram of a terminal device configured to implement manner D3. As shown in Fig. 14, the device further includes:
a third sending module 117, configured to periodically send the local APP information to the network side, the APP information including an APP identifier and a version number, to enable the network side to determine the APP to be updated of a terminal according to the APP information, generate the APP list to be updated and send the APP list to be updated to the router.

In manner D3, the terminal periodically sends the local APP identifier and version number to the network side through the third sending module 117, and the network side queries a version of the corresponding APP in an APP store to determine the APP to be updated, generate the APP list to be updated and send the APP list to be updated to the router. In such a manner, the router can download the installation file of the APP to be updated in advance and then the terminal can acquire the installation file from the router when updating the APP. Since data may be directly downloaded from the router faster, the APP updating speed is increased, and moreover, for the user, network congestion caused by the centralized downloading of the installation files may be avoided. In addition, the silent manner is still adopted for the APP updating process, that is, the user is not required to execute the upgrading installation operation, and the terminal automatically updates the APP.

In addition, the network side may query a version state of the APP in real time, so that the network side may determine the APP to be updated more accurately and comprehensively.

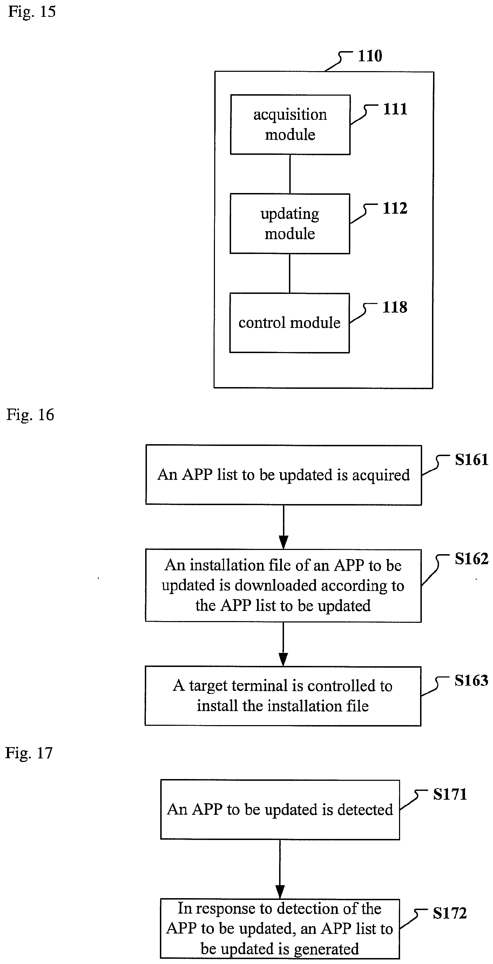

In another embodiment, the router is limited in storage capacity, and may not keep the downloaded installation file all the time. Fig. 15 is a block diagram of a terminal device configured to participate in APP updating according to another embodiment. As shown in Fig. 15, the device further includes:
a control module 118, configured to, in response to determination that the APP to be updated has been updated or the APP to be updated has been uninstalled, control the router to delete the installation file.

In the embodiment, the terminal controls the router to delete the installation file of the updated or uninstalled APP through the control module 118, so that a storage space of the router is effectively saved.

An embodiment of the present invention provides a method for APP updating. A router downloads an installation file according to an APP list to be updated, and a terminal directly acquires the installation file from the router for performing updating.

The methods for APP updating, which are executed on a router side and a terminal side respectively, are described below.

On the router side

Fig. 16 is a flow chart showing a method for APP updating according to an embodiment. As shown in Fig. 16, the method for APP updating is applied to a router, and includes the following steps that:
Step S161: an APP list to be updated is acquired;
Step S162: an installation file of an APP to be updated is downloaded according to the APP list to be updated; and
Step S163: a target terminal is controlled to install the installation file.

For example, the APP list to be updated acquired by the router includes five APPs to be updated: APP1, APP2, APP3, APP4 and APP5. The router downloads installation files of the five APPs to be updated from a network side. The terminal may directly acquire the installation files of the APPs to be updated from the router for updating.

In the embodiment, the router downloads the installation files of the APPs to be updated in advance, and the terminal acquires the installation files from the router when updating the APPs. In such a manner, data may be directly downloaded from the router faster, so that an APP updating speed is increased, and moreover, for a user, network congestion caused by centralized downloading of installation files may be avoided. In addition, a silent manner is still adopted for an APP updating process, that is, the user is not required to execute upgrading installation operation, and the terminal automatically updates the APP.

There are multiple manners for the router to acquire the APP list to be updated, and these are specifically described below.

Manner E1: the router detects the APPs to be updated, and generates the APP list to be updated.

Fig. 17 is a flow chart showing a method for APP updating according to Manner E1. As shown in Fig. 17, the step that the APP list to be updated is acquired includes that:
Step S171: an APP to be updated is detected; and
Step S172: in response to detection of the APP to be updated, an APP list to be updated is generated.

In manner E1, the terminal periodically sends local APP identifier and version number to the router, and the router determines the APP to be updated by itself, and generates the APP list to be updated. In such a manner, the router can download the installation file of the APP to be updated in advance and then the terminal can acquire the installation file from the router when updating the APP. Since data may be directly downloaded from the router faster, the APP updating speed is increased, and moreover, for the user, network congestion caused by the centralized downloading of the installation files may be avoided. In addition, the silent manner is still adopted for the APP updating process, that is, the user is not required to execute the upgrading installation operation, and the terminal automatically updates the APP.

Manner E2: the terminal generates the APP list to be updated, and sends the APP list to be updated to the router.

Here, the step that the APP list to be updated is acquired includes that:
the APP list to be updated sent by the target terminal is acquired.

In manner E2, the terminal determines the APP to be updated by itself, generates the APP list to be updated and sends the APP list to be updated to the router. Therefore, the router can download, in advance, the installation file of the APP to be updated and then the terminal can acquire the installation file from the router when updating the APP. In such a manner, data may be directly downloaded from the router faster, so that the APP updating speed is increased, and moreover, for the user, network congestion caused by the centralized downloading of the installation files may be avoided. In addition, the silent manner is still adopted for the APP updating process, that is, the user is not required to execute the upgrading installation operation, and the terminal automatically updates the APP.

Manner E3: the network side generates the APP list to be updated, and sends the APP list to be updated to the router.

Here, the step that the APP list to be updated is acquired includes that:
the APP list to be updated sent by the network side is acquired.

In manner E3, the terminal periodically sends the local APP identifier and version number to the network side, and the network side queries a version of the corresponding APP in an APP store to determine the APP to be updated, generate the APP list to be updated and send the APP list to be updated to the router. In such a manner, it is also achieved that the router downloads, in advance, the installation file of the APP to be updated and then the terminal acquires the installation file from the router when updating the APP. Since data may be directly downloaded from the router faster, the APP updating speed is increased, and moreover, for the user, network congestion caused by the centralized downloading of the installation files may be avoided. In addition, the silent manner is still adopted for the APP updating process, that is, the user is not required to execute the upgrading installation operation, and the terminal automatically updates the APP.

In the abovementioned three manners the router can acquire the APP list to be updated. The router acquires multiple APP lists to be updated, and the router may compare APPs in each list to finally determine an APP of which an installation file is required to be downloaded.

In another embodiment, the router may choose when to download the installation file of the APP to be updated, and there may be multiple manners as follows.

Manner F1: the installation file is downloaded at preset time.

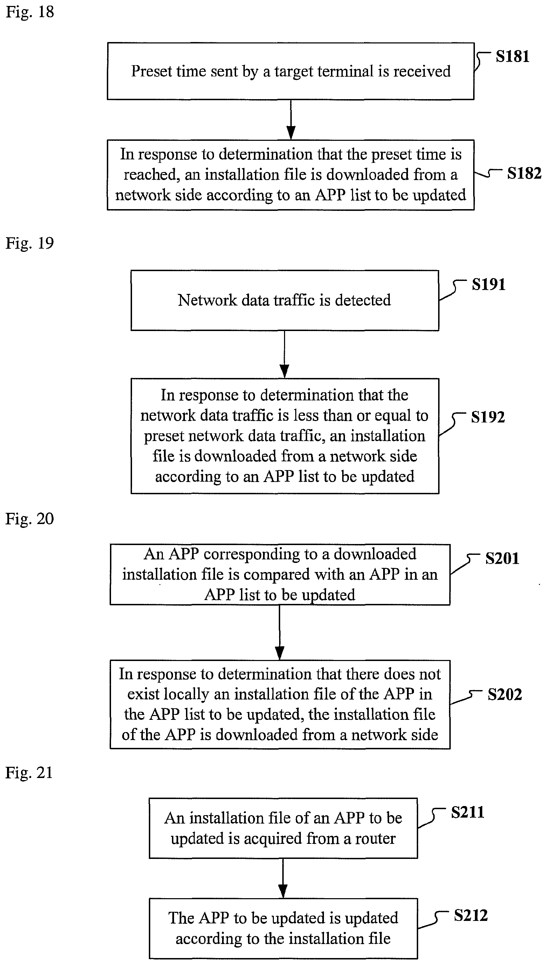

Fig. 18 is a flow chart showing a method for APP updating according to another embodiment. As shown in Fig. 18, the step that the installation file of the APP to be updated is downloaded according to the APP list to be updated includes that:
Step S181: an indication of the preset time, sent by the target terminal, is received; and
Step S182: in response to determination that the preset time is reached, the installation file is downloaded from the network side according to the APP list to be updated.

For example, the user may make a setting, through the terminal, such that the router executes downloading of the installation file between 12:00PM and 5:00AM, and during this time, the user is usually in a sleep state and may not use a network, and the router is relatively idle, so that downloading during this time may avoid network congestion and influence on use of the user over the network, and better user experience may be achieved.

In manner F1, the installation file is downloaded according to the received preset time to avoid network congestion and influence on the use of the user over the network and achieve better user experience.

Manner F2: the installation file is downloaded during idle time of the router.

Fig. 19 is a flow chart showing a method for APP updating according to another embodiment. As shown in Fig. 19, the step that the installation file of the APP to be updated is downloaded according to the APP list to be updated includes that:
Step S191: network data traffic is detected; and
Step S192: in response to determination that the network data traffic is less than or equal to a preset level of network data traffic, the installation file is downloaded from the network side according to the APP list to be updated.

For example, when the network data traffic is detected to be lower than 10kb/s, the router is relatively idle, and the installation file of the APP to be updated may be downloaded to avoid network congestion and influence on use of the user over the network and achieve better user experience.

In manner F2, whether to download the installation file or not is determined according to the detected network data traffic, so that network congestion and influence on use of the user over the network are avoided, and better user experience is achieved.

Manner F1 and manner F2 may be combined for use, that is, the installation file of the APP to be updated may be downloaded at the preset time, or may also be downloaded when the network data traffic is lower.

In another embodiment, the router may be connected with the terminal to control the terminal to install the downloaded installation file after downloading the installation file of the APP to be updated. The step that the target terminal is controlled to install the installation file includes that:
in response to detection of a connection established between the target terminal and the router, the installation file is sent to the target terminal through the connection for the target terminal to update the APP to be updated by installing the installation file.

In another embodiment, the router is limited in storage capacity, and may not keep the downloaded installation file all the time. Optionally, the method for APP updating further includes that:
in response to determination that the terminal has updated the APP, has uninstalled the APP or has had an installation file of a higher-version APP, a currently stored installation file of the APP is deleted.

In the embodiment, deleting the installation file of the updated or uninstalled APP of the terminal effectively saves a storage space of the router and reduces waste of network data traffic.

In another embodiment, for improving downloading efficiency of the router and avoiding downloading of a useless APP installation file, the router may screen out an APP in the list of APPs to be updated. Fig. 20 is a flow chart showing a method for APP updating according to another embodiment. As shown in Fig. 20, the step that the installation file is downloaded from the network side according to the APP list to be updated includes that:
Step S201: an APP corresponding to the downloaded installation file is compared with the APPs in the APP list to be updated; and
Step S202: in response to determination that there does not exist locally an installation file of the APP in the APP list to be updated, the installation file of the APP is downloaded from the network side.

For example, APPs corresponding to locally downloaded installation files may be APP3, APP6 and APP9. APPs in the APP list to be updated may include APP1, APP2, APP3, APP4 and APP5. After comparison, if an installation file configured for updating APP3 has been downloaded, then the installation file of APP3 will not be downloaded, and only installation files of the APPs including APP1, APP2, APP4 and APP5 are installed.

In the embodiment, the APP corresponding to the downloaded installation file is compared with an APP in the APP list to be updated, and the installation file of the APP is downloaded from the network side according to a comparison result. Therefore, the downloading efficiency of the router is improved, downloading of useless APP installation files is avoided, and waste of network data traffic is reduced.

On the terminal side

Fig. 21 is a flow chart showing a method applied to a terminal cooperating in the method for APP updating, and includes the following steps that:
Step S211: an installation file of an APP to be updated is acquired from a router; and
Step S212: the APP to be updated is updated according to the installation file.

In this method, when the terminal updates an APP, the terminal acquires an installation file from the router, and updates the APP according to the installation file. In such a manner, data may be directly downloaded from the router faster, so that an APP updating speed is increased, and moreover, for a user, network congestion caused by centralized downloading of installation files may be avoided. In addition, a silent manner is still adopted for an APP updating process, that is, the user is not required to execute upgrading installation operation, and the terminal automatically updates the APP.

In another embodiment, the terminal may control the router to acquire an APP list to be updated in manners as follows.

Manner G1: the terminal periodically sends APP information to the router, and the router detects an APP to be updated and generates an APP list to be updated.

The method for APP updating further includes that:
local APP information is periodically sent to the router, the APP information including an APP identifier and a version number, to enable the router to monitor the APP to be updated according to the APP information, generate the APP list to be updated and download the installation file of the APP to be updated.

In manner G1, the terminal periodically sends the local APP identifier and version number to the router, and the router determines the APP to be updated by itself and generates the APP list to be updated. Therefore, the router can download, in advance, the installation file of the APP to be updated and then the terminal can acquire the installation file from the router when updating the APP. In such a manner, data may be directly downloaded from the router faster, so that the APP updating speed is increased, and moreover, for a user, network congestion caused by the centralized downloading of the installation files may be avoided. In addition, the silent manner is still adopted for the APP updating process, that is, the user is not required to execute the upgrading installation operation, and the terminal automatically updates the APP.

Manner G2: the terminal generates the APP list to be updated and sends the APP list to be updated to the router.

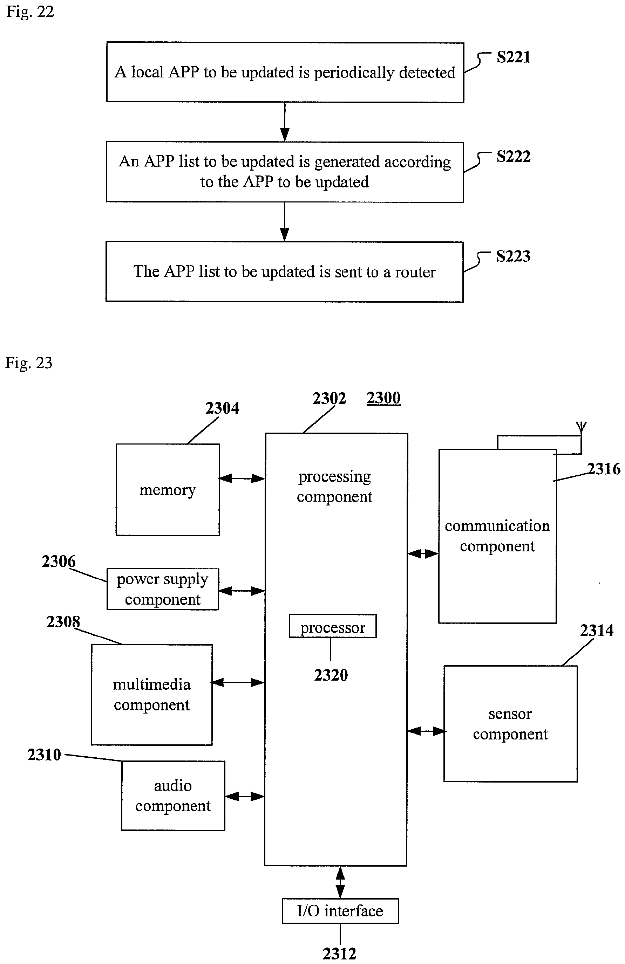

Fig. 22 is a flow chart showing a method for APP updating according to Manner G2. As shown in Fig. 22, the method for APP updating further includes that:
Step S221: a local APP to be updated is periodically detected;
Step S222: an APP list to be updated is generated according to the APP to be updated; and
Step S223: the APP list to be updated is sent to the router.

In manner G2, the terminal determines an APP to be updated, generates an APP list to be updated and sends the APP list to be updated to the router. Therefore, the router can download the installation file of the APP to be updated in advance and then the terminal can acquire the installation file from the router when updating the APP. In such a manner, data may be directly downloaded from the router faster, so that the APP updating speed is increased, and moreover, for the user, network congestion caused by the centralized downloading of the installation files may be avoided. In addition, the silent manner is still adopted for the APP updating process, that is, the user is not required to execute the upgrading installation operation, and the terminal automatically updates the APP.

Manner G3: the terminal periodically sends APP information to a network side, and the network side generates the APP list to be updated and sends the APP list to be updated to the router.

Optionally, the method for APP updating further includes that:
local APP information is periodically sent to the network side, the APP information including an APP identifier and a version number, to enable the network side to determine the APP to be updated of a terminal according to the APP information, generate the APP list to be updated and send the APP list to be updated to the router.

In manner G3, the terminal periodically sends the local APP identifier and version number to the network side through a third sending module 117, and the network side queries a version of the corresponding APP in an APP store to determine the APP to be updated, generate the APP list to be updated and send the APP list to be updated to the router. In such a manner, it is also achieved that the router downloads the installation file of the APP to be updated in advance and then the terminal acquires the installation file from the router when updating the APP. Since data may be directly downloaded from the router faster, the APP updating speed is increased, and moreover, for a user, network congestion caused by the centralized downloading of the installation files may be avoided. In addition, a silent manner is still adopted for the APP updating process, that is, the user is not required to execute the upgrading installation operation, and the terminal automatically updates the APP.

In addition, the network side may query a version state of the APP in real time, so that the network side may determine the APP to be updated more accurately and comprehensively.

In another embodiment, the router is limited in storage capacity, and may not keep the downloaded installation file all the time. Therefore, the method for APP updating further includes that:
in response to determination that the APP to be updated has been updated or the APP to be updated has been uninstalled, the router is controlled to delete the installation file.

In the embodiment, the terminal controls the router to delete the installation file of the updated or uninstalled APP, so that a storage space of the router is effectively saved.

An embodiment of the present invention further provides a device for APP updating, including:
a processor; and
a memory configured to store an instruction executable by the processor,
wherein the processor is configured to:
acquire an APP list to be updated;
download an installation file of an APP to be updated according to the APP list to be updated; and
control a target terminal to install the installation file.

An embodiment of the present invention further provides a device for APP updating, including:
a processor; and
a memory configured to store an instruction executable by the processor,
wherein the processor may be configured to:
acquire an installation file of an APP to be updated from a router; and
update the APP to be updated according to the installation file.

Fig. 23 is a block diagram of terminal equipment that may cooperate with the methods device for APP updating according to an embodiment. For example, the device 2300 may be a video camera, sound recording equipment, a mobile phone, a computer, a digital broadcast terminal, a messaging device, a gaming console, a tablet device, a medical device, fitness equipment, a personal digital assistant and the like.

The device 2300 may include one or more of the following components: a processing component 2302, a memory 2304, a power component 2306, a multimedia component 2308, an audio component 2310, an Input/Output (I/O) interface 2312, a sensor component 2314, and a communication component 2316.

The processing component 2302 typically controls overall operations of the device 2300, such as the operations associated with display, telephone calls, data communications, camera operations, and recording operations. The processing component 2302 may include one or more processors 2320 to execute instructions to perform all or part of the steps in the abovementioned methods. Moreover, the processing component 2302 may include one or more modules which facilitate interaction between the processing component 2302 and the other components. For instance, the processing component 2302 may include a multimedia module to facilitate interaction between the multimedia component 2308 and the processing component 2302.

The memory 2304 is configured to store various types of data to support the operation of the device 2300. Examples of such data include instructions for any applications or methods operated on the device 2300, data of contacts, phonebook data, messages, pictures, video, etc. The memory 2304 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 2306 provides power for various components of the device 2300. The power component 2306 may include a power management system, one or more power sources, and any other components associated with the generation, management and distribution of power for the device 2300.

The multimedia component 2308 includes a screen providing an output interface between the device 2300 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 2308 includes a front camera and/or a rear camera. The front camera and/or the rear camera may receive external multimedia data when the device 2300 is in an operation mode, such as a photographing mode or a video mode. Each of the front camera and the rear camera may be a fixed optical lens system or have focusing and optical zooming capabilities.

The audio component 2310 is configured to output and/or input an audio signal. For example, the audio component 2310 includes a microphone (MIC), and the MIC is configured to receive an external audio signal when the device 2300 is in the operation mode, such as a call mode, a recording mode and a voice recognition mode. The received audio signal may be further stored in the memory 2304 or sent through the communication component 2316. In some embodiments, the audio component 2310 further includes a speaker configured to output audio signals.

The I/O interface 2312 provides an interface between the processing component 2302 and a peripheral interface module, and the peripheral interface module may be a keyboard, a click wheel, a button and the like. The button may include, but not limited to: a home button, a volume button, a starting button and a locking button.

The sensor component 2314 includes one or more sensors configured to provide status assessment in various aspects for the device 2300. For instance, the sensor component 2314 may detect an open/closed status of the device 2300 and relative positioning of components, such as the display and the keypad of the device 2300, and the sensor component 2314 may further detect a change in position of the device 2300 or a component of the device 2300, a presence or absence of user contact with the device 2300, an orientation or an acceleration/deceleration of the device 2300 and a change in temperature of the device 2300. The sensor component 2314 may include a proximity sensor configured to detect presence of an nearby object without any physical contact. The sensor component 2314 may also include a light sensor, such as a Complementary Metal Oxide Semiconductor (CMOS) or Charge Coupled Device (CCD) image sensor, configured for use in imaging applications. In some embodiments, the sensor component 2314 may also include an acceleration sensor, a gyroscope sensor, a magnetic sensor, a pressure sensor or a temperature sensor.

The communication component 2316 is configured to facilitate wired or wireless communication between the device 2300 and other devices. The device 2300 may access a wireless network based on a communication standard, such as WIFI, 2nd-Generation (2G) or 3rd-Generation (3G), or a combination thereof. In an embodiment, the communication component 2316 receives a broadcast signal or broadcast associated information from an external broadcast management system through a broadcast channel. In an embodiment, the communication component 2316 further includes a Near Field Communication (NFC) module to facilitate short-range communications. For example, the NFC module may be implemented on the basis of a Radio Frequency Identification (RFID) technology, an Infrared Data Association (IrDA) technology, an Ultra-WideBand (UWB) technology, a BlueTooth (BT) technology and other technologies.

The device 2300 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned methods.

In an embodiment, there is also provided a non-transitory computer-readable storage medium including an instruction, such as the memory 2304 including an instruction, and the instruction may be executed by the processor 2320 of the device 2300 to implement the abovementioned methods. For example, the non-transitory computer-readable storage medium may be a ROM, a Radom Access Memory (RAM), a Compact Disc Read-Only Memory (CD-ROM), a magnetic tape, a floppy disc, an optical data storage device and the like.

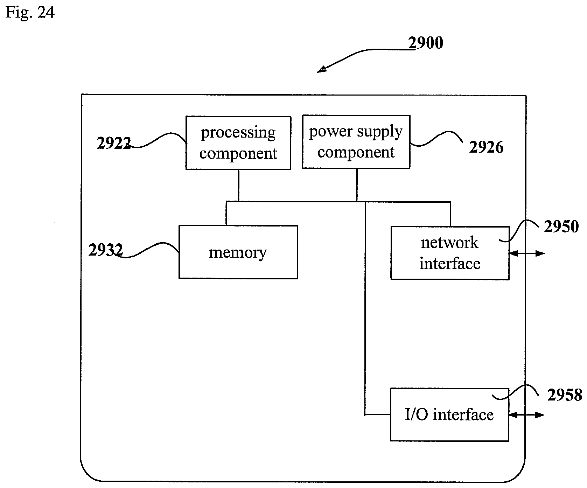

Fig. 24 is a block diagram of a router device 2900 for APP updating according to an embodiment. The device 2900 includes a processing component 2922, which further includes one or more processors, and a memory resource represented by a memory 2932, configured to store instructions such as APPs executable by the processing component 2922. The APPs stored in the memory 2932 may include one or more than one module. Each module may include a set of instructions. In addition, the processing component 2922 is configured to execute the instructions to execute the abovementioned methods.

The device 2900 may further include a power component 2926 configured to execute power mangement of the device 2900, a wired or wireless network interface 2950 configured to connect the device 2900 to a network, and an I/O interface 2958. The device 2900 may be operated on the basis of an operating system stored in the memory 2932, such as Windows ServerTM, Mac OS XTM, UnixTM, LinuxTM or FreeBSDTM.

According to a non-transitory computer-readable storage medium, when instructions in the storage medium are executed by a processor of the device 2300, the device 2300 may execute the abovementioned method for APP updating, the method including that:
an installation file of an APP to be updated is acquired from a router; and
the APP to be updated is updated according to the installation file.

The method further includes that:
local APP information is periodically sent to the router, the APP information including an APP identifier and a version number, to enable the router to monitor the APP to be updated according to the APP information, generate an APP list to be updated and download the installation file of the APP to be updated.

Optionally, the method further includes that:
a local APP to be updated is periodically detected;
the APP list to be updated is generated according to the APP to be updated; and
the APP list to be updated is sent to the router.

Optionally, the method further includes that:
local APP information is periodically sent to a network side, the APP information including an APP identifier and a version number, to enable the network side to determine the APP to be updated of a terminal according to the APP information, generate the APP list to be updated and send the APP list to be updated to the router.

Optionally, the method further includes that:
in response to determination that the APP to be updated has been updated or the APP to be updated has been uninstalled, the router is controlled to delete the installation file.

According to a non-transitory computer-readable storage medium, when instructions in the storage medium are executed by a processor of the device 2900, the device 2900 may execute the abovementioned method for APP updating, the method including that:
an APP list to be updated is acquired;
an installation file of an APP to be updated is downloaded according to the APP list to be updated; and
a target terminal is controlled to install the installation file.

The step that the APP list to be updated is acquired includes that:
the APP to be updated is detected; and
in response to detection of the APP to be updated, the APP list to be updated is generated.

The step that the APP list to be updated is acquired includes that:
the APP list to be updated sent by the target terminal is acquired.

The step that the APP list to be updated is acquired includes that:
the APP list to be updated sent by a network side is acquired.

Optionally, the step that the installation file of the APP to be updated is downloaded according to the APP list to be updated includes that:
an indication of a preset time sent by the target terminal is received; and
in response to determination that the preset time is reached, the installation file is downloaded from the network side according to the APP list to be updated.

Optionally, the step that the installation file of the APP to be updated is downloaded according to the APP list to be updated includes that:
network data traffic is detected; and
in response to determination that the network data traffic is less than or equal to preset network data traffic, the installation file is downloaded from the network side according to the APP list to be updated.

Optionally, the step that the target terminal is controlled to install the installation file includes that:
in response to detection of a connection established between the target terminal and a router, the installation file is sent to the target terminal through the connection for the target terminal to update the APP to be updated by installing the installation file.

Optionally, the method further includes that:
in response to determination that the terminal has updated the APP, has uninstalled the APP or has had an installation file of a higher-version APP, a currently stored installation file of the APP is deleted.

Optionally, the step that the installation file is downloaded from the network side according to the APP list to be updated includes that:
an APP corresponding to the downloaded installation file is compared with an APP in the APP list to be updated; and
in response to determination that there does not exist locally the installation file of the APP in the APP list to be updated, the installation file of the APP is downloaded from the network side.

Other embodiments of the present invention will be apparent to those skilled in the art from consideration of the specification and practice of the embodiments of the present invention disclosed here. This application is intended to cover any variations, uses, or adaptations of the embodiments of the present invention following the general principles thereof and including such departures from the embodiments of the present invention as come within known or customary practice in the art within the scope of the following claims.

It will be appreciated that the embodiments of the present invention are not limited to the exact construction that has been described above and illustrated in the accompanying drawings, and that various modifications and changes may be made without departing from the scope thereof. It is intended that the scope of the embodiments of the present invention only be limited by the appended claims.

### INDUSTRY APPLICABILITY

In an embodiment, a router downloads an installation file of an APP to be updated, in advance, and a terminal acquires the installation file from the router when updating the APP. In such a manner, data may be directly downloaded from the router faster, so that an APP updating speed is increased, and moreover, for a user, network congestion caused by centralized downloading of installation files may be avoided. In addition, a silent manner is still adopted for an APP updating process, that is, the user is not required to execute upgrading installation operation, and the terminal automatically updates the APP.

In another embodiment, the terminal periodically sends local APP identifier and version number to a network side, and the network side queries a version of a corresponding APP in an APP store to determine the APP to be updated, generate an APP list to be updated and send the APP list to be updated to the router. In such a manner, the router can download the installation file of the APP to be updated in advance and then the terminal can acquire the installation file from the router when updating the APP. Since data may be directly downloaded from the router faster, the APP updating speed is increased, and moreover, for the user, network congestion caused by the centralized downloading of the installation files may be avoided. In addition, the silent manner is still adopted for the APP updating process, that is, the user is not required to execute the upgrading installation operation, and the terminal automatically updates the APP.

In another embodiment, the terminal determines an APP to be updated by itself, generates an APP list to be updated and sends the APP list to be updated to the router. Therefore, the router can download the installation file of the APP to be updated in advance and then the terminal can acquire the installation file from the router when updating the APP. In such a manner, data may be directly downloaded from the router faster, so that the APP updating speed is increased, and moreover, for the user, network congestion caused by the centralized downloading of the installation files may be avoided. In addition, the silent manner is still adopted for the APP updating process, that is, the user is not required to execute the upgrading installation operation, and the terminal automatically updates the APP.

The terminal periodically sends local APP identifier and version number to the router, and the router determines an APP to be updated and generates an APP list to be updated. Therefore, the router can download, in advance, the installation file of the APP to be updated and then the terminal can acquire the installation file from the router when updating the APP. In such a manner, data may be directly downloaded from the router faster, so that the APP updating speed is increased, and moreover, for the user, network congestion caused by the centralized downloading of the installation files may be avoided. In addition, the silent manner is still adopted for the APP updating process, that is, the user is not required to execute the upgrading installation operation, and the terminal automatically updates the APP.

In another embodiment, the router does not keep the installation file of the updated or uninstalled APP of the terminal, so that a storage space of the router is effectively saved.

In another embodiment, an APP corresponding to a downloaded installation file is compared with an APP in an APP list to be updated, and the installation file of the APP is downloaded from a network side according to a comparison result. Therefore, downloading efficiency of the router is improved, downloading of a useless APP installation file is avoided, and waste of network data traffic is reduced.

## Claims

1. A method for Application, APP, updating, the method comprising:
acquiring, by the router, an APP list that indicates at least one APP to be updated, the APP list being determined by the router or a server or a target terminal (S161);
downloading, by the router, an installation file for updating the at least one APP to be updated according to the APP list to be updated (S162); and
connecting, by the router, with the target terminal and sending the installation file of an APP to be updated to the target terminal such that the target terminal installs the installation file; and
wherein the method further comprises:
acquiring, by the router, multiple APP lists determined by the router, the server and the target terminal, including the APP list that indicates the at least one APP, wherein said acquiring of multiple APP lists includes at least one of:
acquiring, by the router, the APP list to be updated sent by the target terminal, and
acquiring, by the router, the APP list to be updated sent by a network side; and
determining, by the router, whether to download the installation file for updating the at least one APP based on comparing, by the router, APPs in the multiple APP lists;
wherein acquiring the APP list to be updated by the router comprises:
detecting, by the router, the at least one APP to be updated based on APP information periodically sent to the router by the target terminal (S171), the APP information including an APP identifier and a version number; and
in response to detection of the APP to be updated, generating the APP list to be updated (S172).

2. The method according to claim 1, wherein downloading the installation file for updating the at least one APP to be updated according to the APP list to be updated comprises:
receiving, by the router, from the target terminal data identifying a preset time (S181); and
in response to determination that the preset time is reached, downloading the installation file from a network side according to the APP list to be updated (S182).

3. The method according to claim 1, wherein downloading the installation file of the APP to be updated according to the APP list to be updated comprises:
detecting network data traffic of the router (S191); and
in response to determination that the network data traffic is less than or equal to preset network data traffic, downloading the installation file from a network side according to the APP list to be updated (S192).

4. The method according to claim 1, wherein downloading the installation file according to the APP list to be updated comprises:
comparing, by the router, an APP corresponding to a downloaded installation file with an APP in the APP list; and
in response to determination that there does not exist locally the installation file of the APP in the APP list, downloading, by the router, the installation file from a network side.

5. A router comprising:
an acquisition module (31), configured to acquire an APP list that indicates at least one APP to be updated, the APP list being determined by the router or a server or a target terminal;
a downloading module (32), configured to download an installation file for updating the at least one APP to be updated according to the APP list to be updated acquired by the acquisition module; and
a control module (33), configured to connect the router with the target terminal and send the installation file of an APP to be updated to the target terminal such that the target terminal installs the installation file;
wherein the acquisition module comprises at least one of:
a first acquisition sub-module (51), configured to acquire the APP list to be updated sent by the target terminal, and
a second acquisition sub-module (61), configured to acquire the APP list to be updated sent by a network side; and
the downloading module (32) is further configured to determine whether to download the installation file for updating the at least one APP based on comparing APPs in multiple APP lists from the router, the server and the target terminal acquired by the acquisition module (31), wherein the multiple APP lists including the APP list that indicates the at least one APP;
wherein the acquisition module comprises:
a detection sub-module (41), configured to detect the at least one APP to be updated based on APP information periodically sent to the router by the target terminal, the APP information including an APP identifier and a version number; and
a generation sub-module (42), configured to, in response to the detection sub-module detecting the APP to be updated, generate the APP list to be updated.

6. The router according to claim 5, wherein the downloading module comprises:
a receiving sub-module (71), configured to receive from the target terminal data indicative of a preset time; and
a first downloading sub-module (72), configured to, in response to determination that the preset time received by the receiving sub-module is reached, download the installation file from a network side according to the APP list to be updated.

7. The router according to claim 5, wherein the downloading module comprises:
a detection sub-module (81), configured to detect network data traffic of the router; and
a second downloading sub-module (82), configured to, in response to determination that the network data traffic is less than or equal to preset network data traffic, download the installation file from a network side according to the APP list to be updated.

8. The router according to claim 5, wherein the downloading module comprises:
a comparison sub-module (101), configured to compare an APP corresponding to a downloaded installation file with an APP in the APP list to be updated; and
a third downloading sub-module (102), configured to, in response to determination of the comparison sub-module that there does not exist locally the installation file of the APP in the APP list to be updated, download the installation file of the APP from the network side.

9. A router device for Application, APP, updating, comprising:
a processor; and
a memory configured to store an instruction executable by the processor,
wherein the processor is configured to:
acquire an APP list that indicates at least one APP to be updated, the APP list being determined by the router or a server or a target terminal;
download an installation file for updating the at least one APP to be updated according to the APP list to be updated; and
connect with the target terminal and send the installation file of an APP to be updated to the target terminal such that the target terminal installs the installation file;
wherein the processor is further configured to:
acquire multiple APP lists determined by the router, the server and the target terminal, including the APP list that indicates the at least one APP, wherein said acquiring of multiple APP lists includes at least one of:
acquiring, by the router, the APP list to be updated sent by the target terminal, and
acquiring, by the router, the APP list to be updated sent by a network side; and
determine whether to download the installation file for updating the at least one APP based on comparing APPs in the multiple APP lists;
wherein the processor is further configured to:
detect the at least one APP to be updated based on APP information periodically sent to the router by the target terminal, the APP information including an APP identifier and a version number; and
in response to detection of the APP to be updated, generate the APP list to be updated.

10. A computer program including instructions for executing the steps of a method for Application, APP, updating according to any one of claims 1 to 4 when said program is executed by a computer.

11. A recording medium readable by a computer and having recorded thereon a computer program including instructions for executing the steps of a method for Application, APP, updating according to any one of claims 1 to 4.

## Patentansprüche

1. Verfahren zur Aktualisierung einer Anwendung, APP, wobei das Verfahren umfasst:
Beziehen einer APP-Liste durch den Router, die mindestens eine zu aktualisierende APP angibt, wobei die APP-Liste von dem Router oder einem Server oder einem Zielendgerät bestimmt wird (S161),
Herunterladen einer Installationsdatei zur Aktualisierung der mindestens einen zu aktualisierenden APP gemäß der zu aktualisierenden APP-Liste durch den Router (S162), und
Verbinden mit dem Zielendgerät durch den Router und Senden der Installationsdatei einer zu aktualisierenden APP an das Zielendgerät, so dass das Zielendgerät die Installationsdatei installiert, und
wobei das Verfahren ferner umfasst:
Beziehen mehrerer APP-Listen, die von dem Router, dem Server und dem Zielendgerät bestimmt werden, durch den Router, einschließlich der APP-Liste, die die mindestens eine APP angibt, wobei das Beziehen mehrerer APP-Listen mindestens eines beinhaltet von:
Beziehen der zu aktualisierenden APP-Liste, die von dem Zielendgerät gesendet wird, durch den Router, und
Beziehen der zu aktualisierenden APP-Liste, die von einer Netzwerkseite gesendet wird, durch den Router, und
Bestimmen durch den Router, ob die Installationsdatei zur Aktualisierung der mindestens einen APP herunterzuladen ist, auf der Basis eines Vergleichens von APP in den mehreren APP-Listen durch den Router,
wobei das Beziehen der zu aktualisierenden APP-Liste durch den Router umfasst:
Erkennen der mindestens einen zu aktualisierenden APP durch den Router auf der Basis von APP-Informationen, die periodisch von dem Zielendgerät an den Router gesendet werden (S171), wobei die APP-Informationen eine APP-Kennung und eine Versionsnummer beinhalten, und
als Reaktion auf die Erkennung der zu aktualisierenden APP Erzeugen der zu aktualisierenden APP-Liste (S172).

2. Verfahren nach Anspruch 1, wobei das Herunterladen der Installationsdatei zur Aktualisierung der mindestens einen zu aktualisierenden APP gemäß der zu aktualisierenden APP-Liste umfasst:
Empfangen von Daten, die eine voreingestellte Zeit identifizieren, von dem Zielendgerät durch den Router (S181), und
als Reaktion auf eine Bestimmung, dass die voreingestellte Zeit erreicht ist, Herunterladen der Installationsdatei von einer Netzwerkseite gemäß der zu aktualisierenden APP-Liste (S182).

3. Verfahren nach Anspruch 1, wobei das Herunterladen der Installationsdatei der zu aktualisierenden APP gemäß der zu aktualisierenden APP-Liste umfasst:
Erkennen von Netzwerkdatenverkehr des Routers (S191), und
als Reaktion auf eine Bestimmung, dass der Netzwerkdatenverkehr kleiner als oder gleich einem voreingestellten Netzwerkdatenverkehr ist, Herunterladen der Installationsdatei von einer Netzwerkseite gemäß der zu aktualisierenden APP-Liste (S192).

4. Verfahren nach Anspruch 1, wobei das Herunterladen der Installationsdatei gemäß der zu aktualisierenden APP-Liste umfasst:
Vergleichen einer APP, die einer heruntergeladenen Installationsdatei entspricht, mit einer APP in der APP-Liste durch den Router, und
als Reaktion auf eine Bestimmung, dass die Installationsdatei der APP nicht lokal in der APP-Liste existiert, Herunterladen der Installationsdatei von einer Netzwerkseite durch den Router.

5. Router, umfassend:
ein Bezugsmodul (31), das dazu ausgestaltet ist, eine APP-Liste zu beziehen, die mindestens eine zu aktualisierende APP angibt, wobei die APP-Liste von dem Router oder einem Server oder einem Zielendgerät bestimmt wird,
ein Herunterlademodul (32), das dazu ausgestaltet ist, eine Installationsdatei zur Aktualisierung der mindestens einen zu aktualisierenden APP gemäß der zu aktualisierenden APP-Liste, die von dem Bezugsmodul bezogen wurde, herunterzuladen, und
ein Steuermodul (33), das dazu ausgestaltet ist, den Router mit dem Zielendgerät zu verbinden und die Installationsdatei einer zu aktualisierenden APP an das Zielendgerät zu senden, so dass das Zielendgerät die Installationsdatei installiert,
wobei das Bezugsmodul mindestens eines umfasst von:
einem ersten Bezugsteilmodul (51), das dazu ausgestaltet ist, die zu aktualisierende APP-Liste, die von dem Zielendgerät gesendet wird, zu beziehen, und
einem zweiten Bezugsteilmodul (61), das dazu ausgestaltet ist, die zu aktualisierende APP-Liste, die von einer Netzwerkseite gesendet wird, zu beziehen, und
wobei das Herunterlademodul (32) ferner dazu ausgestaltet ist, zu bestimmen, ob die Installationsdatei zur Aktualisierung der mindestens einen APP herunterzuladen ist, auf der Basis eines Vergleichens von APP in mehreren APP-Listen von dem Router, dem Server und dem Zielendgerät, die von dem Bezugsmodul (31) bezogen werden, wobei die mehreren APP-Listen die APP-Liste beinhalten, die die mindestens eine APP angibt,
wobei das Bezugsmodul umfasst:
ein Erkennungsteilmodul (41), das dazu ausgestaltet ist, die mindestens eine zu aktualisierende APP auf der Basis von APP-Informationen, die periodisch von dem Zielendgerät an den Router gesendet werden, zu erkennen, wobei die APP-Informationen eine APP-Kennung und eine Versionsnummer beinhalten, und
ein Erzeugungsteilmodul (42), das dazu ausgestaltet ist, als Reaktion darauf, dass das Erkennungsteilmodul die zu aktualisierende APP erkennt, die zu aktualisierende APP-Liste zu erzeugen.

6. Router nach Anspruch 5, wobei das Herunterlademodul umfasst:
ein Empfangsteilmodul (71), das dazu ausgestaltet ist, Daten, die eine voreingestellte Zeit angeben, von dem Zielendgerät zu empfangen, und
ein erstes Herunterladeteilmodul (72), das dazu ausgestaltet ist, als Reaktion auf eine Bestimmung, dass die voreingestellte Zeit, die von dem Empfangsteilmodul empfangen wird, erreicht ist, die Installationsdatei von einer Netzwerkseite gemäß der zu aktualisierenden APP-Liste herunterzuladen.

7. Router nach Anspruch 5, wobei das Herunterlademodul umfasst:
ein Erkennungsteilmodul (81), das dazu ausgestaltet ist, Netzwerkdatenverkehr des Routers zu erkennen, und
ein zweite Herunterladeteilmodul (82), das dazu ausgestaltet ist, als Reaktion auf eine Bestimmung, dass der Netzwerkdatenverkehr kleiner als oder gleich einem voreingestellten Netzwerkdatenverkehr ist, die Installationsdatei von einer Netzwerkseite gemäß der zu aktualisierenden APP-Liste herunterzuladen.

8. Router nach Anspruch 5, wobei das Herunterlademodul umfasst:
ein Vergleichsteilmodul (101), das dazu ausgestaltet ist, eine APP, die einer heruntergeladenen Installationsdatei entspricht, mit einer APP in der zu aktualisierenden APP-Liste zu vergleichen, und
ein drittes Herunterladeteilmodul (102), das dazu ausgestaltet ist, als Reaktion auf eine Bestimmung des Vergleichsteilmoduls, dass die Installationsdatei der APP nicht lokal in der zu aktualisierenden APP-Liste existiert, die Installationsdatei der APP von der Netzwerkseite herunterzuladen.

9. Router-Vorrichtung zur Aktualisierung einer Anwendung, APP, umfassend:
einen Prozessor, und
einen Speicher, der dazu ausgestaltet ist, eine durch den Prozessor ausführbare Anweisung zu speichern,
wobei der Prozessor ausgestaltet ist zum:
Beziehen einer APP-Liste, die mindestens eine zu aktualisierende APP angibt, wobei die APP-Liste von dem Router oder einem Server oder einem Zielendgerät bestimmt wird,
Herunterladen einer Installationsdatei zur Aktualisierung der mindestens einen zu aktualisierenden APP gemäß der zu aktualisierenden APP-Liste, und
Verbinden mit dem Zielendgerät und Senden der Installationsdatei einer zu aktualisierenden APP an das Zielendgerät, so dass das Zielendgerät die Installationsdatei installiert,
wobei der Prozessor ferner ausgestaltet ist zum:
Beziehen mehrerer APP-Listen, die von dem Router, dem Server und dem Zielendgerät bestimmt werden, einschließlich der APP-Liste, die die mindestens eine APP angibt, wobei das Beziehen mehrerer APP-Listen mindestens eines beinhaltet von:
Beziehen der zu aktualisierenden APP-Liste, die von dem Zielendgerät gesendet wird, durch den Router, und
Beziehen der zu aktualisierenden APP-Liste, die von einer Netzwerkseite gesendet wird, durch den Router, und
Bestimmen, ob die Installationsdatei zur Aktualisierung der mindestens einen APP herunterzuladen ist, auf der Basis eines Vergleichens von APP in den mehreren APP-Listen,
wobei der Prozessor ferner ausgestaltet ist zum:
Erkennen der mindestens einen zu aktualisierenden APP auf der Basis von APP-Informationen, die periodisch von dem Zielendgerät an den Router gesendet werden, wobei die APP-Informationen eine APP-Kennung und eine Versionsnummer beinhalten, und
als Reaktion auf die Erkennung der zu aktualisierenden APP Erzeugen der zu aktualisierenden APP-Liste.

10. Computerprogramm, das Anweisungen zur Ausführung der Schritte eines Verfahrens zur Aktualisierung einer Anwendung, APP, nach einem der Ansprüche 1 bis 4 beinhaltet, wenn das Programm von einem Computer ausgeführt wird.

11. Aufzeichnungsmedium, das durch einen Computer lesbar ist und ein Computerprogramm aufweist, das Anweisungen zur Ausführung der Schritte eines Verfahrens zur Aktualisierung einer Anwendung, APP, nach einem der Ansprüche 1 bis 4, darauf aufgezeichnet beinhaltet.

## Revendications

1. Procédé de mise à jour d'application, APP, le procédé comprenant :
l'acquisition, par le routeur, d'une liste APP qui indique au moins une APP à mettre à jour, la liste APP étant déterminée par le routeur ou un serveur ou un terminal cible (S161) ;
le téléchargement, par le routeur, d'un fichier d'installation pour mettre à jour l'au moins une APP à mettre à jour selon la liste APP à mettre à jour (S162) ; et
la connexion du routeur au terminal cible et l'envoi du fichier d'installation d'une APP à mettre à jour au terminal cible afin que le terminal cible installe le fichier d'installation ; et
dans lequel le procédé comprend en outre :
l'acquisition, par le routeur, de multiples listes APP déterminées par le routeur, le serveur et le terminal cibler, comportant la liste APP qui indique l'au moins une APP, dans lequel ladite acquisition de multiples listes APP comporte au moins l'une parmi :
l'acquisition, par le routeur, de la liste APP à mettre à jour envoyée par le terminal cible, et
l'acquisition, par le routeur, de la liste APP à mettre à jour envoyée par un côté réseau ; et
la détermination, par le routeur, précisant s'il faut télécharger le fichier d'installation pour mettre à jour l'au moins une APP en comparant, par le routeur, les APP dans les multiples listes APP ;
dans lequel l'acquisition de la liste APP à mettre à jour par le routeur comprend :
la détection, par le routeur, de l'au moins une APP à mettre à jour sur la base d'informations APP envoyées périodiquement au routeur par le terminal cible (S171), les informations APP comportant un identifiant APP et un numéro de version ; et
en réponse à la détection de l'APP à mettre à jour, la génération de la liste APP à mettre à jour (S172).

2. Procédé selon la revendication 1, dans lequel le téléchargement du fichier d'installation pour mettre à jour l'au moins une APP à mettre à jour selon la liste APP à mettre à jour comprend :
la réception du terminal cible, par le routeur, de données identifiant un temps prédéfini (S181) ; et
en déterminant que le temps prédéfini est atteint, le téléchargement du fichier d'installation à partir d'un côté réseau selon la liste APP à mettre à jour (S182).

3. Procédé selon la revendication 1, dans lequel le téléchargement du fichier d'installation de l'APP à mettre à jour selon la liste APP à mettre à jour comprend :
la détection d'un trafic de données de réseau du routeur (S191) ; et
en déterminant que le trafic de données de réseau est inférieur ou égal au trafic de données de réseau prédéfini, le téléchargement du fichier d'installation à partir d'un côté réseau selon la liste APP à mettre à jour (S192).

4. Procédé selon la revendication 1, dans lequel le téléchargement du fichier d'installation selon la liste APP à mettre à jour comprend :
la comparaison, par le routeur, d'une APP correspondant à un fichier d'installation téléchargé avec une APP de la liste APP ; et
en déterminant qu'il n'existe pas localement de fichier d'installation de l'APP dans la liste APP, le téléchargement, par le routeur, du fichier d'installation à partir d'un côté réseau.

5. Routeur comprenant :
un module d'acquisition (31), configuré pour acquérir une liste APP qui indique au moins une APP à mettre à jour, la liste APP étant déterminée par le routeur ou un serveur ou un terminal cible ;
un module de téléchargement (32), configuré pour télécharger un fichier d'installation pour mettre à jour l'au moins une APP à mettre à jour selon la liste APP à mettre à jour acquise par le module d'acquisition ; et
un module de commande (33), configuré pour connecter le routeur au terminal cible et envoyer le fichier d'installation d'une APP à mettre à jour au terminal cible afin que le terminal cible installe le fichier d'installation ;
dans lequel le module d'acquisition comprend au moins l'un parmi :
un premier sous-module d'acquisition (51), configuré pour acquérir la liste APP à mettre à jour envoyée par le terminal cible, et
un deuxième sous-module d'acquisition (61), configuré pour acquérir la liste APP à mettre à jour envoyée par un côté réseau ; et
le module de téléchargement (32) est en outre configuré pour déterminer s'il faut télécharger le fichier d'installation pour mettre à jour l'au moins une APP en comparant les APP dans les multiples listes APP du routeur, du serveur et du terminal cible acquises par le module d'acquisition (31), dans lequel les multiples listes APP comportent la liste APP qui indique l'au moins une APP ;
dans lequel le module d'acquisition comprend :
un sous-module de détection (41), configuré pour détecter l'au moins une APP à mettre à jour sur la base d'informations APP envoyées périodiquement au routeur par le terminal cible, les informations APP comportant un identifiant APP et un numéro de version ; et
un sous-module de génération (42), configuré pour, en réponse à la détection par le sous-module de détection de l'APP à mettre à jour, générer la liste APP à mettre à jour.

6. Routeur selon la revendication 5, dans lequel le module de téléchargement comprend :
un sous-module de réception (71), configuré pour recevoir du terminal cible des données indiquant un temps prédéfini ; et
un premier sous-module de téléchargement (72), configuré pour, en déterminant que le temps prédéfini reçu par le sous-module de réception est atteint, télécharger le fichier d'installation à partir d'un côté réseau selon la liste APP à mettre à jour.

7. Routeur selon la revendication 5, dans lequel le module de téléchargement comprend :
un sous-module de détection (81), configuré pour détecter un trafic de données de réseau du routeur ; et
un deuxième sous-module de téléchargement (82), configuré pour, en déterminant que le trafic de données de réseau est inférieur ou égal au trafic de données de réseau prédéfini, télécharger le fichier d'installation à partir d'un côté réseau selon la liste APP à mettre à jour.

8. Routeur selon la revendication 5, dans lequel le module de téléchargement comprend :
un sous-module de comparaison (101), configuré pour comparer une APP correspondant à un fichier d'installation téléchargé avec une APP de la liste APP à mettre à jour ; et
un troisième sous-module de téléchargement (102), configuré pour, en déterminant par le sous-module de comparaison qu'il n'existe pas localement de fichier d'installation de l'APP dans la liste APP à mettre à jour, télécharger le fichier d'installation de l'APP à partir du côté réseau.

9. Dispositif routeur de mise à jour d'application, APP, comprenant :
un processeur ; et
une mémoire configurée pour stocker une instruction exécutable par le processeur,
dans lequel le processeur est configuré pour :
acquérir une liste APP qui indique au moins une APP à mettre à jour, la liste APP étant déterminée par le routeur ou un serveur ou un terminal cible ;
télécharger un fichier d'installation pour mettre à jour l'au moins une APP à mettre à jour selon la liste APP à mettre à jour ; et
se connecter au terminal cible et envoyer le fichier d'installation d'une APP à mettre à jour au terminal cible afin que le terminal cible installe le fichier d'installation ;
dans lequel le processeur est en outre configuré pour :
acquérir de multiples listes APP déterminées par le routeur, le serveur et le terminal cibler, comportant la liste APP qui indique l'au moins une APP, dans lequel ladite acquisition de multiples listes APP comporte au moins l'une parmi :
l'acquisition, par le routeur, de la liste APP à mettre à jour envoyée par le terminal cible, et
l'acquisition, par le routeur, de la liste APP à mettre à jour envoyée par un côté réseau ; et
la détermination précisant s'il faut télécharger le fichier d'installation pour mettre à jour l'au moins une APP en comparant les APP dans les multiples listes APP ;
dans lequel le processeur est en outre configuré pour :
détecter l'au moins une APP à mettre à jour sur la base d'informations APP envoyées périodiquement au routeur par le terminal cible, les informations APP comportant un identifiant APP et un numéro de version ; et
en réponse à la détection de l'APP à mettre à jour, générer la liste APP à mettre à jour.

10. Programme informatique comportant des instructions pour l'exécution des étapes d'un procédé de mise à jour d'application, APP, selon l'une quelconque des revendications 1 à 4 lorsque ledit programme est exécuté par un ordinateur.

11. Support d'enregistrement lisible par un ordinateur sur lequel est enregistré un programme informatique comportant des instructions pour l'exécution des étapes d'un procédé de mise à jour d'application, APP, selon l'une quelconque des revendications 1 à 4.
